# EUROPÄISCHE PATENTANMELDUNG

(11) **EP 1 560 428 A1**
(43) Veröffentlichungstag der Anmeldung: **03.08.2005**
(21) Anmeldenummer: 05405024.0
(22) Anmeldetag: 14.01.2005
(51) Int. Cl.: H04N 5/44

(54) **Dispositiv zum automatischen Messen des Abstandes von einem Fernsehbildschirm**

(30) Priorität: 30.01.2004 CH 136042004
(71) Anmelder: Viemme Sagl, 6850 Mendrisio (CH)
(72) Erfinder: Valsangiacomo, Giorgio, 6835 Morbio Superiore (CH)
(74) Vertreter: Gaggini, Carlo

(57) **Zusammenfassung**

Die vorliegenden Erfindung betrifft ein Dispositiv zum automatischen Messen des Abstandes eines Fernsehbildschirms (5) vom Zuschauer und zum Ergreifen von Vorsichtsmassnahmen (Abschalten des Apparates, Reduktion der Helligkeit und/oder des Formats des Bildes und/oder der Lautstärke des Apparates, usw.), falls der Abstand vom Zuschauer kleiner ist als ein voreingestellter Wert.

Der Zweck ist der Schutz des Zuschauers, insbesondere von Kindern, vor den bei zu nahem Anschauen des Bildes schädlichen Einflüssen der Ultraviolettstrahlung, die vom Fernsehbildschirm ausgeht.

Die vorliegende Erfindung ist dadurch gekennzeichnet, dass der Ultraschallsender und der Uitraschallempfänger in einem vom Femsehgerät (2) absolut unabhängigen Monokapselgerät (1) integriert sind, das irgendwo in der Nähe des Fernsehbildschirms (5) angebracht werden kann, wobei das Monokapselgerät (1) mit dem "SCART"-Anschluss (3) des Fernsehgeräts (2) verbunden ist und über diesen auf das Funktionieren des Femsehgeräts (2) einwirkt.

## Beschreibung

Die vorliegende Erfindung betrifft ein Dispositiv zum automatischen Messen des Abstandes eines Fernsehbildschirms vom Zuschauer und zum Ergreifen von Vorsichtsmassnahmen, falls dieser Abstand kleiner ist als ein voreingestellter Wert, gemäss dem Oberbegriff des Anspruchs 1.

Dispositive solcher Art zur Vorbeugung sind besonders nützlich, wenn die Zuschauer Kinder sind, die bekanntlich dazu neigen, sich beim interessierten Zuschauen dem Bildschirm auf weniger als einen Meter Abstand zu nähern, um die Einzelheiten der Bilder besser sehen zu können. Jedermann weiss, dass das Betrachten eines Fernsehbildschirms aus derart kurzer Distanz zu schwerer Beeinträchtigung des Sehvermögens des Zuschauers führen kann, umso mehr, wenn es sich um Kinder zarten Alters handelt. In diesem Fall kann der Schaden schwerwiegend sein und bleibende Beeinträchtigung der Sehschärfe verursachen. Ein weiteres Problem ist ähnlicher Natur, betrifft jedoch ein anderes Sinnesorgan, nämlich das Gehör. Wenn man sich zu nahe an der Lärmquelle aufhält, beispielsweise am Lautsprecher eines Fernsehgeräts, können die empfindlichen Gehörorgane schwere Schäden erleiden, insbesondere bei kleinen Kindern.

Anderseits ist die Gewohnheit bekannt, die in letzter Zeit immer mehr zunimmt, Kinder vor dem Fernsehapparat sitzen zu lassen, ohne dass sie von Erwachsenen überwacht würden, die eingreifen und die genannten Gefahren abwenden könnten. Somit handelt es sich dabei um ein bekanntes öffentliches Gesundheitsproblem, gegen das mittels geeignet scheinender Vorkehrungen Abhilfe zu schaffen bereits versucht wurde.

Insbesondere ist der Vorschlag bekannt, dass der Fernsehempfänger mit einem Dispositiv zur automatischen Messung des obengenannten Abstandes ausgerüstet wird, gemäss dem Oberbegriff des Anspruchs 1 der vorliegenden Erfindung, das mittels Ultraschall die Zeitdifferenz zwischen dem Aussenden und dem Empfang des vom Fernsehzuschauer zurückgeworfenen Ultraschalls messen kann und daraus die obengenannte Distanz berechnen und angemessene Vorkehrungen treffen kann.

Dispositive solcher Art sind vor allem aus der Patentliteratur bekannt, haben jedoch kaum oder keine praktische Anwendung gefunden, aus Gründen, die im folgenden erwähnt sind.

So ist aus der EP-0034926 von 1980 ein Dispositiv für die Fernseher-Überwachung bekannt, das vorgesehen ist, um das vom Fernsehgerät ausgehende Signal (beispielsweise das Bild) zu verändern, und um allenfalls ein Alarmsignal abzugeben, wenn ein zu diesem Zweck Sensor vorgesehen ist, dessen Bauart bzw. dessen Emissionsart nicht genauer beschrieben ist, der die Präsenz oder die Bewegung von Personen feststellt. In diesem Fall kann der Fernsehapparat abgestellt werden, oder es kann ein Alarmsignal ausgesandt werden. Dabei ist jedoch die Messung des Abstandes des Zuschauers vom Fernsehbildschirm mittels Ultraschall nicht ausdrücklich beschrieben. Es wird lediglich gesagt, dass die Wellen auf einer mit den menschlichen Sinnen nicht wahrnehmbaren Frequenz ausgestrahlt werden.

In einem andern Dokument aus dem Jahr 1985, US-4'641'191, ist sodann ein Dispositiv beschrieben, das die Gegenwart eines Zuschauers in der Nähe des Bildschirms des Fernsehapparates feststellen soll. Die Apparatur ist dabei so ausgerüstet, dass die Arbeitseinstellungen des Vdeoteils verändert werden, in dem Sinne, dass die Leuchtkraft des Bildschirms zunimmt, wenn der Zuschauer anwesend ist, und sich verringert, wenn der Zuschauer abwesend ist. Hier ist der Zweck nicht das Vermeiden von Schädigungen der Sehkraft oder des Gehörs des Zuschauers, sondern das Verringern des Verbrauchs an elektrischer Energie, wenn der Zuschauer abwesend ist, bzw. dass der Fernsehapparat - entsprechend einer bedauerlichen aber immer weiter verbreiteten Gewohnheit - eingeschaltet bleibt. Es handelt sich hier um ein sogenanntes automatisches Standby-Dispositiv.

Besonders interessant, und gewiss den für die vorliegende Erfindung massgebenden Stand der Technik darstellend, ist das Dispositiv zum automatischen Messen einer Distanz, das in der DE-3716425 von 1986 beschrieben ist.

In diesem Dokument ist klar ein Dispositiv gezeigt, das entsprechend dem Titel geeignet ist, festzustellen ob der Zuschauer sich in vorbestimmtem Mindestabstand vom Bildschirm befindet. Zweck dieser Einrichtung ist klar jener der vorliegenden Erfindung, nämlich zu verhindern, dass *"das Sehvermögen des Zuschauers durch die Einwirkung der Ultraviolettstrahlung, die der Bildschirm abstrahlt, beeinträchtigt wird".* Das Dispositiv arbeitet auf Basis der Zeitdifferenz zwischen dem Moment des Ausstrahlens eines Ultraschalls vom Sender, und dem Moment, in dem die gleichen Wellen, von einer Person zurückgeworfen, von einem Ultraschall-Empfänger empfangen werden.

Dieses bekannte Dispositiv, dessen Zweck und dessen Lösung klar beschrieben sind, und das generell die an die vorliegende Erfindung gestellten Anforderungen erfüllen kann, weist jedoch immer noch zwei wichtige Nachteile auf, welche die Realisierung erschweren und die Einführung im praktischen Gebrauch praktisch verhindert haben.

Der erste dieser Nachteile besteht darin, dass die Einrichtung aus einem Sender oder Übertragungsorgan für Ultraschallwellen und aus einem separaten Ultraschall-Empfänger besteht, also aus einem Sensor, der aus zwei getrennten Elementen besteht. Dies bedingt, dass diese beiden Elemente an bestimmten Orten angebracht sein müssen, so dass der Empfänger in seiner Funktion nicht negativ durch direkte Ultraschall-Abstrahlungen beeinflusst werden kann, die vom Sender ausgehen. Darüber hinaus ist bei allen bekannten Dispositiven gemäss dem Stand der Technik vorgesehen, dass das Dispositiv selbst direkt im Fernsehapparat eingebaut ist, und dass die Verbindungen, die erforderlich sind, um auf die Funktionen des Fernsehapparates Einfluss zu nehmen, innerhalb der Schaltkreise des Fernsehgerätes selbst vorgesehen sind. Dies macht erforderlich, dass das Fernsehgerät bei der Fabrikation für eine solche Anwendung vorbereitet wird, also mit Ultraschallsensoren ausgerüstet wird, die den Abstand des Bildschirms vom Zuschauer messen können, sowie mit den Verbindungen zur Einflussnahme auf die Funktionen des Fernsehgeräts. Die Praxis hat erwiesen, dass die Hersteller von Fernsehgeräten einer solche Anforderung nicht gerecht werden konnten, so dass die löblichen Absichten der Erfinder der genannten Patentschriften unerfüllt blieben.

Die technische Entwicklung der letzten Jahre ist jedoch dem Erfinder entgegengekommen, indem neue Apparatetypen auf den Markt kommen konnten, die wesentlich zur Lösung der auf dem Gebiet der hier interessierenden noch offenen Probleme beigetragen haben. Einerseits handelt es sich dabei um die Entwicklung sogenannte Monokapselgeräte, die ein Ultraschallsignal praktisch am gleichen Ort aussenden und empfangen können, ohne dass Interferenzprobleme zwischen Sender und Empfänger auftreten. Diese Monokapseln sind heute auf dem Elektronikmarkt leicht erhältlich und sind jedem Fachmann auf dem Gebiet bekannt.

Ferner führte die Entwicklung der Fernsehgeräte zur generellen Einführung des sogenannten "SCART-Anschlusses (entsprechend der Abkürzung des französischen Verbandes der Hersteller von Radio-Empfängern und Fernsehgeräten", welcher Verband die Auslegung und die Funktionen genormt hat), also eines universellen Anschlusses, mit dem heute praktisch alle modernen Fernsehgeräte ausgerüstet sind, und der den Anschluss der neuen, heute im täglichen Gebrauch stehenden Geräte erlaubt, wie beispielsweise VCR, DVD, Decoder, Video Game, usw. Dieser universell verwendbare "SCART"-Anschluss erlaubt also das Einspeisen von Signalen von aussen, die von verschiedensten heute verwendeten Geräten stammen, in Fernsehgeräte jeder beliebigen Marke, um den Fernsehapparat auf günstigste Weise steuern zu können. Die vorliegende Erfindung macht daher Gebrauch von diesen neuen Möglichkeiten und wendet sie auf die Technologie an, die an sich aus der DE-3716425 bekannt ist, so dass ein erfindungsgemässes Dispositiv geschaffen wird, das die Anforderungen des Marktes erfüllen kann, ohne die Hersteller von Fernsehgeräten zu zwingen, in ihren Fabrikaten einzugreifen und sie mit neuen zusätzlichen Aggregaten auszurüsten.

Der Zweck der vorliegenden Erfindung ist daher, ein Dispositiv vorzuschlagen zum automatischen Messen des Abstandes eines Fernsehbildschirm zum Zuschauer und zum Ergreifen von Vorsichtsmassnahmen bzw. Vorbeugungsmassnahmen, falls diese Distanz kleiner als ein vorgegebener Wert ist, wobei die beschriebenen Nachteile der bekannten Dispositive beseitigt werden, wie jener, der in der DE-3716425 ersichtlich ist, und wodurch das Dispositiv leicht auf jedem neuen oder weniger neuen Fernsehgerät beliebiger Herkunft angewendet werden kann, unter der Voraussetzung, dass es mit einem Universalanschluss "SCART" ausgerüstet ist, und dass es den automatischen Kommutationsmodus des Kanals AV unterstützt, wobei diese Bedingung von praktisch allen "SCART"-Anschlüssen erfüllt wird und daher dem Fachmann auf dem Gebiet keinerlei Schwierigkeit bereitet.

Diese Ziele werden erreicht mittels eines Dispositivs gemäss dem Oberbegriff des Anspruchs 1 und gekennzeichnet durch den kennzeichnenden Teil dieses Anspruchs.

Die vorliegenden Erfindung sieht vor, dass der Ultraschall-Sender und der Ultraschall-Empfänger in einem Monokapselgerät integriert sind, wie es an sich aus der praktischen Anwendung bekannt ist, und dass das Monokapselgerät ein vom Fernsehapparat ganz unabhängiges Gerät ist, das an beliebiger Stelle in unmittelbarer Nähe des Fernsehbildschirms angebracht werden kann, zusammen mit seinem notwendigen und unabdingbaren Speise- und Auswertgerät, und das mit dem "SCART"-Anschluss des Fernsehgeräts mittels eines geeigneten Verbindungskabels verbunden werden kann, so dass über diesen "SCART"-Anschluss auf die Funktion des Fernsehgerätes eingewirkt werden kann. Dank der Verwendung von Monokapselgeräten für Ultraschall, wie sie im normalen Fachhandel erhältlich sind, und dank den "SCART"-Anschlüssen, mit welchen heute alle modernen Fernsehgeräte ausgerüstet sind, wird es also möglich jedes Fernsehgerät mit dem Gerät für die Kontrolle und die Vorbeugung gegen Schäden an den Sinnesorgane der Zuschauer und insbesondere der unbeaufsichtigten Kindern auszurüsten, ohne dass am Fernsehgerät selbst irgendwelche Änderungen erforderlich sind, wobei lediglich das Ultraschall-Dispositiv in der Nähe des Fernsehbildschirms angebracht und am immer vorhandenen "SCART"-Anschluss des Fernsehgeräts angeschlossen werden muss. Damit steht der Weg offen für bequeme und allgemeine Anwendung des erfindungsgemässen Schutz-Dispositivs, ganz zum Vorteil der unversehrten Gesundheit und des körperlichen Zustandes der Zuschauer.

Die abhängigen Ansprüche 2 bis 6 betreffen weitere Verbesserungen der Grundidee gemäss dem Anspruch 1, die einzeln mit ihren Vorteilen in der nachfolgenden Beschreibung erklärt werden.

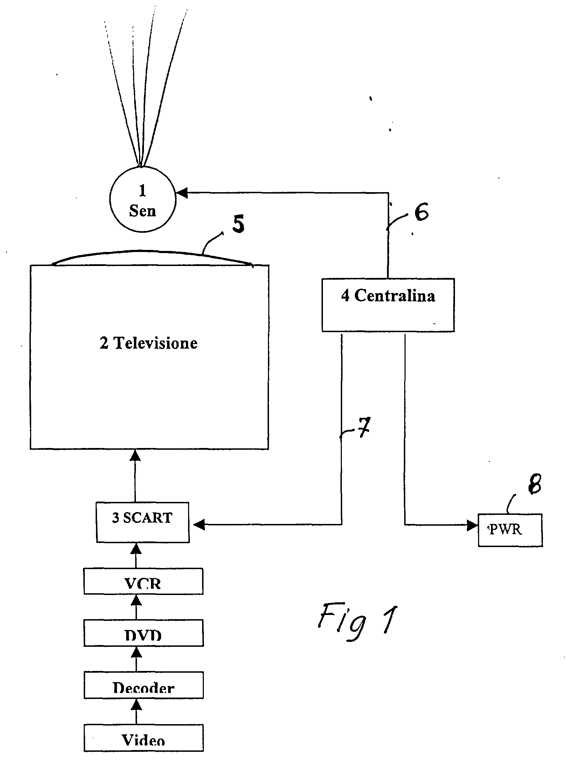

Die vorliegenden Erfindung wird im Folgenden in ihren Einzelheiten unter Bezugnahme auf ein Schema des Dispositivs (Fig. 1) näher beschrieben, wobei in Erinnerung gerufen sei, dass die in Betracht gezogenen Apparate alle Geräte sind, die auf dem Elektronik-Markt erhältlich sind, und die dem Fachmann auf dem Gebiet bestens bekannt sind, so dass sich deren eingehendere Beschreibung erübrigt.

Einzig ein Hinweis sei angebracht bezüglich der Wahl von Ultraschall als Strahlungsquelle bei der Realisierung der vorliegenden Erfindung. Während andere Vorschläge (beispielsweise EP-0034926) auch die Ausstrahlung elektromagnetischer Wellen allgemeiner Art vorsahen, konzentriert sich die vorliegende Erfindung ganz auf die Anwendung von Ultraschall, nämlich weil sich in der Praxis gezeigt hat, dass Ultraschallwellen für den Menschen absolut unschädlich sind (im Unterschied zu andern Strahlungsarten) und zudem gegen jede Art von äusseren Einflüssen unempfindlich sind, wie beispielsweise Licht, Luftfeuchtigkeit, Lärm im Bereich der von Menschen hörbaren Frequenzen, usw. Diese Eigenschaften, nämlich das Fehlen jeglicher Kontraindikationen, soweit es um die Gesundheit der einer solcher Strahlung ausgesetzten Personen geht - und die extreme Unempfindlichkeit gegen äussere Einflüsse, machen Ultraschall - wie dies übrigens jeder Fachmann auf dem Gebiet weiss - die absolut bevorzugte Lösung für die Realisierung des erfindungsgemässen Dipositivs.

Das erfindungsgemässe Dipositiv ist in der Fig. 1 schematisch dargestellt, in der 1 das Monokapselgerät bezeichnet, das mit einem Ultraschallsender sowie mit einem Ultraschallempfänger ausgerüstet ist. Das Monokapselgerät 1 kann als eine vom Fernsehgerät 2 absolut unabhängige Einheit an irgendeiner Stelle in unmittelbarer Nähe des Fernsehbildschirms angeordnet werden, zusammen mit seinem Speise- und Datenauswertegerät 4, welches das Monokapselgerät 1 über die Verbindungsleitung 6 mit der erforderlichen elektrischen Energie versorgt und die vom Monokapselgerät 1 empfangenen Daten auswertet und daraus das Warnsignal bildet. Das Monokapselgerät 1 ist über die Leitung 7 mit dem "SCART"-Anschluss 3 bekannter Bauart verbunden. Das Speise- und Auswertegerät 4 seinerseits wird aus einer beliebigen Energiequelle 8 gespeist, an die natürlich auch der Fernsehapparat 2 (über eine in der Fig. 1 nicht gezeigte Verbindungsleitung) angeschlossen sein kann.

Am "SCART"-Anschluss 3 sind sodann über geeignete Verbindungsleitungen und gemäss jedem Fachmann auf dem Gebiet bekannter Technik allfällige externe Geräte angeschlossen, wie beispielsweise VCR, DVD, Decoder, Video Game, usw., welche der Erweiterung des Anwendungsbereichs des Fernsehgeräts 2 dienen. Gemäss der vorliegenden Erfindung schickt das Ultraschall-Monokapselgerät 1 via die Leitung 6 die empfangenen Signale aus den ausgestrahlten und vom Körper des Zuschauers zurückgeworfenen Ultraschallwellen. Das Speise- und Auswertegerät 4 ist in der Lage, aus der Zeitdifferenz zwischen dem ausgestrahlten und dem empfangenen zurückgeworfenen Ultraschallsignal zu messen und daraus die Distanz zur Person - normalerweise einem Kind - zu errechnen, welche das Fernsehprogramm auf dem Fernsehbildschirm 5 anschaut. Falls diese Distanz kleiner ist als ein vorgegebener Wert, sendet das Speise- und Steuergerät 4 ein Signal über die Leitung 7 zum "SCART"-Anschluss, welches vom "SCART"-Anschluss des Fernsehgeräts 2 auf das Fernsehgerät 2 gelangt und dieses veranlasst, jene Vorsichtsmassnahmen zu ergreifen, für die es via den "SCART"-Anschluss 3 programmiert worden war. Dies bedingt, dass das Fernsehgerät den automatischen Kommutationsmodus für den Kanal AV unterstützt, was heute bei allen modernen Fernsehgeräten der Fall ist.

Die Möglichkeit, das Monokapselgerät 1 ausserhalb des Fernsehgeräts 2 in der Nähe des Fernsehbildschirms 5 anzubringen und das erfindungsgemässe neue Dispositiv mit dem Ultraschall-Monokapselgerät 1 und das Speise- und Steuergerät 4 mit dem "SCART"-Anschluss, der bei allen modernen Femsehgeräten 2 vorhanden ist, zu verbinden, macht die Anwendung des erfindungsgemässen Dispositivs sehr leicht, da keinerlei Anpassungen am Fernsehapparat 2 erforderlich sind. Gemäss einer ersten bevorzugten Ausführungsform der vorliegenden Erfindung ist vorgesehen, dass die Vorbeugungsmassnahme im vollständigen Abstellen des Bildes des Fernsehgeräts 2 besteht, sobald die Zeitdifferenz zwischen den ausgestrahlten und den empfangenen Signalen kleiner ist als ein vorgegebener Wert, und dass das normale Funktionieren des Fernsehapparates 2 wieder hergestellt wird, sobald die genannte Zeitdifferenz nicht mehr kleiner ist als der vorgegebene Wert. Dieser Effekt des Abstellens des Bildschirms 5 und seiner Wiederinbetriebnahme, sobald die minimale Distanz vom Zuschauer wieder eingehalten wird, ist ausserordentlich lehrreich für den Zuschauer, vor allem, wenn es sich um Kinder handelt, die oft eine praktische Belehrung brauchen, um besser zu lernen.

Gemäss einer andern bevorzugten Ausführungsform der vorliegenden Erfindung, die raffinierter und für die Anwendung bei älteren Personen vorgesehen ist, besteht die Vorbeugungsmassnahme in der Abschwächung der Helligkeit und/oder des Formates des Fernsehbildes und/oder der Verringerung der Lautstärke, sobald die Zeitdifferenz zwischen den ausgestrahlten und den empfangenen Signalen kleiner ist als der voreigestellte Wert und in der Wiederherstellung der Helligkeit und/oder des Formates des Fernsehbildes auf den ursprünglichen Wert und /oder der Wiederherstellung der ursprünglichen Lautstärke, sobald die gemessene Zeitdifferenz nicht mehr kleiner ist als der voreingestellte Wert.

Gemäss einer weiteren bevorzugten Ausführungsform der vorliegenden Erfindung, ist sodann vorgesehen, dass das Monokapselgerät 1 am oberen Teil des Fernsehapparates 2 bzw. des Fernsehbildschirms 5 ohne feste Verbindung mit dem Fernsehapparat 2 angeordnet wird. Anders ausgedrückt, ist das Mono-Capsule-Gerät 1 absolut getrennt vom Fernsehapparat 2, mit welchem es bloss elektrisch über eine Leitung 7 verbunden ist, so dass es jederzeit weggenommen werden und an ein anderes Fernsehgerät angeschlossen werden kann, oder an einem geeigneteren Ort angebracht werden kann, der den Erfordernissen besser entspricht.

Gemäss einer weiteren bevorzugten Ausführungsform der vorliegenden Erfindung, die auf praktischer Erfahrung beruht, liegt der voreingestellte Wert der Distanz, unterhalb welchem die gemäss der vorliegenden Erfindung vorgesehenen Vorsichtsmassnahmen ausgelöst werden, zwischen 1.5 m und 4 m, und beträgt vorzugsweise etwa 2 m.

Die Anwendung des Dispositivs zum automatischen Messen des Abstandes eines Fernsehbildschirms 5 vom Zuschauer sieht in einer weiteren bevorzugten Ausführungsform der vorliegenden Erfindung vor, dass ein mit einem "SCART"-Anschluss 3 versehenes Fernsehgerät, mittels welchem externe Geräte (VCR, DVD, Decoder, Video Game, usw.) angeschlossen werden können, verwendet wird, das in der Lage ist, den automatischen Kommutationsmodus des Kanals AV zu unterstützen. Dabei handelt es sich um eine Bedingung, die bei den modernen Fernsehapparaten weitgehend erfüllt ist, so dass die Verwendbarkeit der vorliegenden Erfindung auf dem grössten Teil der heute bereits in Betrieb stehenden Fernsehgeräten, neben jenen der neuesten Generation, sichergestellt ist.

### Liste der in der Figur verwendeten Bezugsziffern

- 1: Monokapselgerät
- 2: Fernsehgerät
- 3: "SCART"-Anschluss
- 4: Gerät zum Speisen und Auswerten der gemessenen Werte
- 5: Fernsehbildschirm
- 6: Verbindungsleitung
- 7: Verbindungsleitung
- 8: Energiequelle

## Patentansprüche

1. Dispositiv zum automatischen Messen des Abstandes eines Fernsehbildschirms (5) vom Zuschauer und zum Ergreifen von Vorsichtsmassnahmen, sobald dieser Abstand kleiner ist als ein voreingestellter Wert,
einen Ultraschallsender umfassend und einen Ultraschallempfänger, die beim Fernsehapparat (2) dort angebracht werden, wobei der genannte Abstand mittels Bestimmung der Zeitdifferenz zwischen dem Moment der Ausstrahlung des Ultraschalls vom Sender und dem Moment des Empfangs des vom Zuschauer zurückgeworfenen Ultraschalls im Empfänger gemessen wird, und ein Dispositiv umfassend zum Einwirken auf das am Bildschirm (5) des Fernsehgerätes (2) gezeigten Bildes, falls die genannte Zeitdifferenz kleiner wird als ein vorbestimmter Wert,
**dadurch gekennzeichnet, dass**
- der Ultraschallsender und der Ultraschallempfänger in ein Monokapselgerät (1) integriert sind,
- das Monokapselgerät (1) eine vom Fernsehgerät (2) unabhängige Einheit bildet und an jedem beliebigen Ort in unmittelbarer Nähe des Fernsehbildschirms (5) angebracht werden kann, zusammen mit seinem Speise- und Steuergerät (4) zur Speisung und zur Auswertung der empfangenen Daten,
- das Monokapselgerät (1) mit dem "SCART"-Anschluss (3) des Fernsehgeräts (2) verbunden ist, wie alle andern externen Geräte, und über diesen "SCART"-Anschluss (3) auf das Funktionieren des Fernsehgeräts (2) einwirkt.

2. Dispositiv gemäss dem Anspruch 1,
**dadurch gekennzeichnet, dass**
die Vorsichtsmassnahme im vollständigen Abstellen des Bildes auf dem Fernsehbildschirm (2) besteht, falls die Zeitdifferenz zwischen dem Aussenden und dem Empfangen der Signale kleiner ist als der voreingestellte Wert, und im Wiederaufnehmen des normalen Betriebs des Fernsehapparates (2) sobald die genannte Zeitdifferenz nicht mehr kleiner ist als der voreingestellte Wert.

3. Dispositiv gemäss dem Anspruch 1,
**dadurch gekennzeichnet, dass**
die Vorsichtsmassnahme in der Verringerung der Helligkeit und/oder das Format der Bilder auf dem Bildschirm (5) des Fernsehgeräts (2) und/oder der Lautstärke besteht, falls die Zeitdifferenz zwischen dem Aussenden und dem Empfangen der Signale kleiner ist als der voreingestellte Wert, und im Wiederherstellen der ursprünglichen Helligkeit und des ursprünglichen Formates der Bilder und/oder der ursprünglichen Lautstärke, sobald die genannte Zeitdifferenz nicht mehr kleiner ist als der voreingestellte Wert.

4. Dispositiv gemäss dem Anspruch 1,
**dadurch gekennzeichnet, dass**
das Monokapselgerät (1) beim oberen Teil des Fernsehgeräts (2) bzw. des Fernsehbildschirms (5) angebracht wird, ohne feste Verbindung mit dem Fernsehgerät (2).

5. Dispositiv gemäss dem Anspruch 1,
**dadurch gekennzeichnet, dass**
der voreingestellte Wert des Abstandes, unterhalb welchem die vorgesehenen Vorsichtsmassnahmen ausgelöst werden, zwischen 1.5 m und 4 m liegt und vorzugsweise etwa 2 m beträgt.

6. Anwendung des Dispositivs zum automatischen Messen des Abstandes eines Fernsehbildschirms (5) vom Zuschauer gemäss dem Anspruch 1, umfassend einen Ultraschallsender und einen Ultraschallempfänger, die ein einziges Monokapselgerät (1) und ein Gerät (4) zum Speisen und Auswerten der im Monokapselgerät (1) empfangenen Werte,
**dadurch gekennzeichnet, dass**
das Fernsehgerät (2) ein gewöhnliches Fernsehgerät ist, das mit einem "SCART"-Anschluss (3) zum Anschliessen externer Geräte (VCR, DVD, Decoder, Video Game, usw.) ausgerüstet ist, und das den automatischen Kommutationsmodus des Kanals AV zu unterstützen kann.
